(19) Europäisches Patentamt / European Patent Office / Office européen des brevets

(11) **EP 2 068 640 B1**

(12) **EUROPEAN PATENT SPECIFICATION**

(45) Date of publication and mention
of the grant of the patent:
**01.02.2012 Bulletin 2012/05**

(51) Int Cl.:
**A23D 9/00** (2006.01)     **A23G 1/00** (2006.01)

(21) Application number: **07808586.7**

(22) Date of filing: **18.09.2007**

(86) International application number:
**PCT/NL2007/050455**

(87) International publication number:
**WO 2008/035968 (27.03.2008 Gazette 2008/13)**

(54) **COATING OR FILLING COMPOSITION COMPRISING A NON-HYDROGENATED, STEEP MELTING FAT BLEND**

BESCHICHTUNGS- ODER FÜLLZUSAMMENSETZUNG, ENTHALTEND EINE NICHTHYDRIERTE FETTMISCHUNG MIT STEILER SFC-KURVE

COMPOSITION D'ENROBAGE OU DE GARNISSAGE COMPRENANT UN MÉLANGE NON HYDROGÉNÉ DE GRAISSE FONDUE PAR TREMPAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.09.2006 EP 06120905**

(43) Date of publication of application:
**17.06.2009 Bulletin 2009/25**

(73) Proprietor: **Sime Darby Malaysia Berhad**
**Kuala Lumpur, 50350 (MY)**

(72) Inventors:
• **NOOR, Ahmadilfitri**
**Negeri Sembilan,**
**71800 Nilai (MY)**
• **ZIEVERINK, Martinus, Mathilda, Pieter**
**2595 EG Den Haag (NL)**
• **KREEKEL, Harry, Roelof**
**3076 CW Rotterdam (NL)**
• **DE RUITER, Gerhard, Adriaan**
**5473 JE Heeswijk-dinther (NL)**

(74) Representative: **Swinkels, Bart Willem**
**Nederlandsch Octrooibureau**
**J. W. Frisolaan 13**
**2517 JS Den Haag (NL)**

(56) References cited:
**EP-A- 1 025 763     WO-A-96/14756**

**US-A1- 2 726 158     US-A1- 5 932 275**
**US-B1- 6 210 739**

• CHU B S ET AL: "Physical and chemical properties of a lipase-transesterified palm stearin/palm kernel olein blend and its isopropanol-solid and high melting triacylglycerol fractions" FOOD CHEMISTRY, vol. 76, no. 2, February 2002 (2002-02), pages 155-164, XP002213304
• SIEW WAI LIN: "Crystallisation and melting behaviour of palm kernel oil and related products by differential scanning calorimetry" EUROPEAN JOURNAL OF LIPID SCIENCE AND TECHNOLOGY, WILEY VCH VERLAG, WEINHEIM, DE, vol. 103, no. 11, November 2001 (2001-11), pages 729-734, XP002367082 ISSN: 1438-7697
• ROSSELL, J.B., KING, B., AND DOWNES, M.J.: "Composition of oil" JOURNAL OF THE AMERICAN OIL CHEMISTS' SOCIETY., vol. 62, no. 2, 1985, pages 221-230, XP002423488 USAMERICAN OIL CHEMISTS' SOCIETY. CHAMPAIGN.
• SMITH, K.W., CAIN, F.W., AND TALBOT, G.: "Nature and composition of fat bloom from palm kernel stearin and hydrogenated palm kernel stearin compound chocolates." JOURNAL OF AGRICULTURAL AND FOOD CHEMISTRY., vol. 52, 2004, pages 5539-5544, XP002423489 USAMERICAN CHEMICAL SOCIETY. WASHINGTON.

**Description**

TECHNICAL FIELD OF THE INVENTION

The present invention relates to a coating or filling composition comprising a non - hydrogenated, steep melting fat blend. The invention also provides a method for the manufacture of such a non -hydrogenated, steep melting fat blend.

BACKGROUND OF THE INVENTION

Cocoa butter is a well -known example of a steep melting fat that is widely used in confectionary applications, e.g. chocolate. Cocoa butter combines a very high solid fat content at ambient temperature with a melting point below 35 °C. Typically, the solid fat content of cocoa butter at 20 °C is around 80% whereas the solid fat content at 35 °C is usually less than 5%. Thus, in the case of cocoa butter, the curve representing the solid fat content as a function of temperature shows a very steep decrease in the temperature range of 20 to 35 °C. This is why cocoa butter is considered a steep melting fat. As everyone knows who has ev er tasted genuine chocolate, the special melting behaviour of chocolate is one of its most appealing qualities. This desirable melting behaviour is directly associated with the use of a steep melting fat, such as cocoa butter.

Worldwide cocoa bean supply suffers from significant variability. The uncertain availability of cocoa beans and the associated fluctuations in price have led to much effort to formulate alternative fat blends which can be used in place of or in conjunction with cocoa butter. These al ternative fats are generally classified in three types, based on their chemical composition and compatibility with cocoa butter.

Cocoa butter equivalents (CBE) are fats which have chemical and physical properties compatible with cocoa butter, and can be used to supplement cocoa butter in confectionary products. Cocoa butter substitutes (CBS) are generally lauric fats which are incompatible with cocoa butter. Cocoa butter replacers (CBR) are partially compatible with cocoa butter. CBR are primarily non -lauric fats which which have been partially hydrogenated under trans promoting conditions to give relatively steep melting curves and are partially compatible with cocoa butter. Among these three principal types of alternative fats, CBS are least expensive, which explains the wide use of CBS in confectionary applications, such as coatings and fillings.

Like cocoa butter, CBS must not only have a steep melting curve (or steep solid fat content profile) but they must also melt in the appropriate temperature range (e.g. between 27 and 35 °C. For this property, CBS often rely on a high content of lauric acids and/or trans fatty acids. Most CBS contain hydrogenated lauric fats, e.g. hydrogenated palm kernel oil, hydrogenated coconut oil or hydrogenated palm kernel stearin.

US 4,902,527, for instance, describes fats suitable for use in confectionary comprising hardened lauric fat selected from palm kernel oil and its fractions, containing more unsaturated fatty acids than saturated $C_{18}$ acid, trans- unsaturated acids representing at least 25% of said unsaturated fatty acids.

US 5,932,275 describes an oil blend suitable for use as CBS, comprising 10 -16 wt.% of palm kernel oil, 6-12 wt.% of hydrogenated palm kernel oil, 55 -75 wt.% of palm kernel stearin and 7-13 wt.% of hydrogenated palm kernel stearin.

Increasingly, food manufacturers want to avoid using hydrogenated oils in food applications. During hydrogenation of unsaturated oils, naturally occurring cis - unsaturated fatty acids are isomerised to trans -unsaturated fatty acids. Unless unsaturated oils are fully hydrogenated, these hydrogenated oils inevitably contain significant levels of trans -unsaturated fatty acids.

US 5,439,700 describes a non -hydrogenated lauric fat composition for use in confectionary produc ts, said lauric fat composition comprising 25 -55 wt.% of a first palm kernel stearin fraction and 75 -45 wt.% of a second palm kernel stearin fraction obtained by double fractionation. The solid fat content at 30 °C of these non - hydrogenated lauric fats is in the range of 35 -48%.

The objective of the present invention is to provide an economical steep melting fat which does not contain hydrogenated fat and which is perfectly suited for use in confectionary applications, notably fillings and coatings.

SUMMARY OF THE INVENTION

The aforementioned objective was realised by providing a coating or filling composition comprising from 5 -90 wt.% of fat, said fat consisting of a non-hydrogenated, steep -melting fat blend having the following solid fat profile:

- $N_{10}$ of 78-94%
- $N_{20}$ of 52-80%
- $N_{30}$ of 0-22%;
- $N_{20}$-$N_{30}$ within the range of 45 -70%;

and the following fatty acid composition:

- 0-10 wt.% of $C_4$-$C_{10}$ fatty acids;
- 30-56 wt.% of lauric acid;
- 9-25 wt.% of myristic acid;
- 7-25 wt.% of palmitic acid;
- 8-25 wt.% of oleic acid;
- 1-7 wt.% of stearic acid;
- 70-97 wt.% of saturated fatty acids;
- 0-7 polyunsaturated fatty acids.

Despite the virtual absence of trans -unsaturated fatty acids, the fat blends of the present invention exhibit a surprisingly steep melting curve between 20 and 30 °C in combination with a relatively low melting temperature, e.g. a melting temperature below body temperature. Thus, the coating or filling composition containing the present fat blend offers the advantage that it combines a high fat content at ambient temperature with fast melting in the mouth. Furthermore, the high solid fat content at lower temperatures facilitates processing/handling of the coating and filling compositions.

For coatings a high solid fat content at ambient temperature is import ant for hardness and to prevent stickiness or flow. Furthermore, the coating compositions of the present invention offer the advantage of an attractive glossy appearance.

For fillings a high solid fat content at ambient temperature is desirable as it prov ides structure, a sandy mouthfeel and because it prevents the filling from becoming pourable under ambient conditions.

The fat blends of the present invention may suitably be prepared by blending a stearin fraction of a lauric fat with a lauric fat compo nent (e.g. palm kernel oil or coconut oil) and/or a palm oil component (e.g. palm oil). Thus, another aspect of the invention relates to a process of preparing a fat blend as defined in any one of the preceding claims, said process comprising blending toge ther the following components:

- 15-85 parts by weight of stearin fraction of lauric fat having a melting point in the range of 32-36 °C;
- 0-50 parts by weight of non -hydrogenated palm oil component with a melting a melting of 30-54 °C; and
- 0-85 part by weigh t of lauric fat component wi th a melting point of 20 -28 °C.

Surprisingly, it was found that the present process enables the preparation of fat blends having a melting curve between 20 and 30 °C that is steeper than that of any of the components used in it s manufacture.

DETAILED DESCRIPTION OF THE INVENTION

Accordingly, one aspect of the invention relates to a coating or filling composition comprising from 5 -90 wt.% of fat, said fat consisting of a non-hydrogenated, steep - melting fat blend having the following solid fat profile:

- $N_{10}$ of 78 -94%.
- $n_{20}$ of 52-80%;
- $N_{30}$ of 0-22%, preferably of 0-21 %;
- $N_{20}$-$N_{30}$ within the range of 45 -70%;

and the following fatty acid composition:

- 0-10 wt.% of $C_4$-$C_{10}$ fatty acids;
- 30-56 wt.% of lauric acid;
- 9-25 wt.% of myristic acid;
- 7-25 wt.% of palmitic acid;
- 4-25 wt.% of oleic acid;
- 1-7 wt.% of stearic acid;
- 70-97 wt.% of saturated fatty acids;
- 0-7 polyunsaturated fatty acids.

The term "filling composition" as used herein refers to a composition that can be used as an internal filling in bakery, confectionary and pet food applications or as a intermediate layer in e.g. wafers.

The term "coating composition" as used herein refers to a composition that can suitably be employed to prov ide foodstuffs and other products with a coating that is solid at ambient temperature. The coating composition is typically applied after it has been rendered pourable by heating it to a temperature above the melting point of the fat blend contained therein. The coating composition of the invention may suitably be used in confectionary, bakery and pet food applications, such as pastry and bars. Other application areas are ice cream, cheese, chewing gum, biscuits and candles.

Besides the steep melting fat b lend, the coating or filling composition of the present invention advantageously contains at least 5 wt.%, preferably from 10 to 80 wt.% of one or more ingredients selected from the group consisting of sweeteners, milk protein, emulsifiers, hydrocolloids, cocoa, water, alcohol, flavours and combinations thereof.

The terms "oil" and "fat" are deemed to be synonyms and refer to triglyceride compositions.

The term "fatty acid" as used herein encompasses fatty acid residues contained, for instance, in triglycerides.

The N-value $N_1$ equals the solid fat content of a fat at a temperature of t °C as measured by means of ISO 8292 - Animal and vegetable fats and oils - Determination of solid fat content - Pulsed nuclear magnetic resonance method.

Unless indicate d otherwise, fatty acid concentrations are expressed as a percentage of the total weight of fatty acid residues contained in the fat of the coating or filling composition. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

According to a particularly preferred embodiment of the invention, the fat blend is very steep melting as evidenced by an $N_{20}$-$N_{30}$ exceeding 48%, most preferably exceeding 50%. Typically, the $N_{20}$-$N_{30}$ of the present fat blend does not exceed 65 %, more particularly it does not exceed 62% .

According to another preferred embodiment, the fat blend of the present coating or filling composition advantageously melts almost completely at mouth temperature. Accordingly, in an advantageous embodiment the fat blend has an $N_{35}$ of less than 5%, more preferably of less than 3% and mos t preferably of less than 1%.

One embodiment of the present invention relates to coating or filling composition comprising a non -hydrogenated steep -melting fat blend that largely consists of lauric fat components as evidenced by the following fatty acid composition:

- 2-8 wt.% of $C_4$-$C_{10}$ fatty acids;
- 42-56 wt.% of lauric acid;
- 15-25 wt.% of myristic acid;
- 7-14 wt.% of palmitic acid;
- 4-20 wt.% of oleic acid;
- 1-6 wt.% of stearic acid;
- 3-15 wt.% of $C_{18}$-$C_{24}$ fatty acids;
- 80-97 wt.% of saturated fatty acids;
- 0-3 wt.% of polyunsaturated fatty acids.

A particularly preferred hard coating composition of the latter type contains a fat blend that is characterised by the following fatty acid composition:

- 2-6 wt.% of $C_4$-$C_{10}$ fatty acids;
- 48-56 wt.% of lauric acid;
- 18-25 wt.% of myristic acid;
- 7-12 wt.% of palmitic acid;
- 7-12 wt.% of oleic acid;
- 1-4 wt.% of stearic acid;
- 85-93 wt.% of saturated fatty acids;
- 0-2 wt.% of polyunsaturated fatty acids.

This hard coating composition is particular suitable for use in ice cream, c heese, candles, chewing gum and fine bakery products such as biscuits and doughnut. The coating composition may be chocolate based or non -chocolate based.

The solid fat content profile of the latter coating composition typically looks as follows:

- $N_{10}$ of 80-90%;
- $N_{20}$ of 72-80%;
- $N_{30}$ of 15-22%; and
- $N_{20}$-$N_{30}$ within the range of 54-62%.

A preferred filling composition comprising a fat blend largely consisting of lauric fat components has the following fatty acid composition:

- 3-7 wt.% of $C_4$-$C_{10}$ fatty acids;
- 46-54 wt.% of lauric acid;
- 14-22 wt.% of myristic acid;
- 7-12 wt.% of palmitic acid;
- 12-18 wt.% of oleic acid;
- 1-4 wt.% of stearic acid;
- 80-88 wt.% of saturated fatty acids;
- 0-4 wt % of polyunsaturated fatty acids.

This type of filling composition is particula rly suited for use in fine pastry products, fine bakery products such as biscuits and doughnut, cookies, bars and cake.

The solid fat content profile of the latter filling composition typically looks as follows:

- $N_{10}$ of 70-80%;
- $N_{20}$ of 52-60%;
- $N_{30}$ of 0-5%; and
- $N_{20}$-$N_{30}$ within the range of 53-60%.

Another embodiment of the present invention relates to a coating or filling composition comprising a non -hydrogenated steep -melting fat blend that largely consists of a stearin fraction of a lauric fat and a palm oil component as evidenced by the following fatty acid composition:

- 1-6 wt.% of $C_4$-$C_{10}$ fatty acids;
- 30-48 wt.% of lauric acid;
- 10-23 wt.% of myristic acid;
- 12-25 wt.% of palmitic acid;
- 14-28 wt.% of oleic acid;
- 2-6 wt.% of stearic acid;
- 68-90 wt.% of saturated fatty acids;
- 1-6 wt.% of polyunsaturated fatty acids;

A particularly preferred filling composition of the latter type is characterised by the following fatty acid composition:

- 2-6 wt.% of $C_4$-$C_{10}$ fatty acids;
- 32-42 wt.% of lauric acid;
- 12-18 wt.% of myristic acid;
- 14-24 wt.% of palmitic acid;
- 16-26 wt.% of oleic acid;
- 2-5 wt.% of stearic acid;
- 72-85 wt.% of saturated fatty acids;
- 2-5 wt.% of polyunsaturated fatty acids;

The solid fat content profile of the latter filling composition advantageously lo oks as follows:

- $N_{10}$ of 70-80%;
- $N_{20}$ of 50-60%;
- $N_{30}$ of 0-6%; and
- $N_{20}$-$N_{30}$ within the range of 48-56%.

Interesterification is a technique that is commonly employed to change the melting behaviour of fats. In particular, interesterification can be used to mak e a fat or fat blend more steep melting. The fat blend of the present invention offers the advantage that it exhibits a steep melting curve without the need for using interesterified components. Thus, in a preferred embodiment the present fat blend does not comprise chemically interesterified fat components.

The fat blends employed in the coating or filling compositions of the present invention advantageously contain a significant amount of a stearin fraction of a lauric fat, notably palm kernel stearin a nd/or coconut stearin. These stearin fractions are characterised by a relatively high level of triglycerides with a carbon number of 36, relative to triglycerides with a carbon number of 30. Here the carbon number refers to the total number of carbon numbe rs present in the fatty acid residues. Thus, trimyristate has a carbon number of 42 and trilaurate a carbon number of 36. Preferably, the fat blend of the coating or filling composition contains triglycerides with a carbon number of 36 and triglycerides wi th a carbon number of 30 in a weight ratio of at least 20:1, more preferably in a weight ratio of at least 30, most preferably in a weight ratio of at least 40..

Another aspect of the invention relates to a confectionary product or an ice cream product, said product being coated with a coating composition as defined herein before and/or comprising a filling consisting of a filling composition as defined herein before. Preferably, the confectionary or ice cream product contains at least 1 wt.% of the coating composition and/or at least 3 wt.% of the filling composition. Even more preferably, said product contains 2 -50 wt.% of the coating composition and/or at least 5-95 wt.% of the filling composition.. Typical examples of confectionary products encompassed by the present invention include bars, fine pastry, bonbons, wafers, cakes, biscuits

Yet another aspect of the invention relates to a process of preparing a fat blend as defined herein before, said process comprising blending together the following components:

a) 15-85 parts by weight of stearin fraction of lauric fat having a melting point in the range of 32 -36 °C;
b) 0-50 parts by weight of non -hydrogenated palm oil component with a melting a melting of 30-54 °C; and
c) 0-85 part by weight of lauric fat component wi th a melting point of 20 -28 °C.

According a particularly preferred embodiment, the stearin fraction of lauric fat employed in the present process combines an $N_{20}$ of 70%-85% with an $N_{20}$-$N_{30}$ in excess of 45%. Most preferably, the stearin fract ion has the following solid fat profile:

- $N_{10}$ of 80-94%;
- $N_{20}$ of 70-85%;
- $N_{30}$ of 15-40%;
- $N_{20}$-$N_{30}$ within the range of 45 -65%, especially within the range of 48 -55%.

One embodiment of the present process comprises blending together:

a) 15-85 parts by weight of stearin fraction of lauric fat having a melting p oint in the range of 32 -36 °C; and
b) 15-85 part by weight of lauric fat component wit h a melting point of 20 -28 °C.

As explained herein before the lauric stearin fractions employed in accordance with the present invention are characterised by a high level of triglycerides with a carbon number of 36 relative to the content of triglycerides with a carbon number of 30. Preferably, the stearin fraction contains triglycerides with a carbon number of 36 and triglycerides with a carbon number of 30 in a weight ratio of at least 40:1, more preferably in a weight ratio of at least 50:1.

This process can suitably be used to produce a high quality coating fat by blending together 65-85 wt.% of the stearin fraction and 15-35 wt.% of the lauric fat component. Alternatively, the process can be used to prepare a filling composition by blending together 65 -85 wt.% of the lauric fat component and 15 -35 wt.% of the stearin fraction.

Another embodiment of the present proce ss comprises blending together:

a) 60-85 parts by weight of stearin fraction of lauric fat having a melting point in the range of 32 -36 °C; and
b) 15-40 parts by weight of non -hydrogenated palm oil component with a melting point in the range of 30-54 °C. The non-hydrogenated palm oil component is preferably selected from the group consisting of palm oil, palm oil fractions and combinations thereof. Typically, the non -hydrogenated palm oil component has an iodine value in the range of 33 -57, preferably within the range of 39 -54 Most preferably, the non - hydrogenated palm oil component is palm oil.

The stearin fraction of lauric fat employed in the present process advantageously is a stearin fraction of palm kernel oil, a stearin fraction of coconut oil, a stearin fraction of a mixture of palm kernel oil and coconut oil or a mixture of these stearin fractions. Most preferably, the stearin fraction of lauric fat is palm kernel stearin.

The lauric fat component of the present process is suitably selected from th e group consisting of palm kernel oil, coconut oil and combinations thereof. Most preferably, the lauric fat is palm kernel oil.

According to a particularly preferred embodiment of the present process, the stearin fraction of lauric fat, the non-hydrogenated palm oil component and the lauric fat component together represent at least 90 wt.% of the steep -melting fat blend obtained by said process.

As mentioned herein before, it was found that the present process enables the preparation of fat blends havin g a melting curve between 20 and 30 °C that is steeper than that of any of the components used in its manufacture. Thus, according a particularly advantageous embodiment of the present process, the $N_{20}$-$N_{30}$ of the fat blend is at least 2% higher than the th eoretical value [$(N_{20}-N_{30})^{calc}$] calculated on the basis of the $N_{20}$ and $N_{30}$ values of the individual fat components using the following formulae:

$$N_{20}^{calc} = (a \times N_{20}^{A}) + (b \times N_{20}^{B}) + (c \times N_{20}^{C}) + ....$$

$$N_{30}^{calc} = (a \times N_{30}^{A}) + (b \times N_{30}^{B}) + (c \times N_{30}^{C}) + ....$$

$$(N_{20}-N_{30})^{calc} = N_{20}^{calc} - N_{30}^{calc}$$

wherein:

a, b and c represent the respective weight fractions of components A, B and C within the fat blend
$N_T^{X}$ represents the solid fat content of component X at temperature T

The invention is further illustrated by means of the following examples.

EXAMPLES

Example 1

A steep melting fat blend for use in a coating composition is prepared by blending 80 parts by weight of palm kernel stearin with 20 parts by weight of palm kernel oil. The N-line and fatty acid composition of the blend as well as of its components are presented in the following tables 1A and 1B.

Table 1A

|  | Blend | Palm kernel stearin | Palm kernel fat |
|---|---|---|---|
| $N_{10}$ | 85 | 88 | 68 |
| $N_{20}$ | 76 | 80 | 44 |
| $N_{30}$ | 19 | 29 | 0 |
| $N_{35}$ | 0 | 0 | 0 |
| $N_{40}$ | 0 | 0 | 0 |
| $N_{20}$-$N_{30}$ | 57 | 51 | 44 |

Table 1B

|  | Blend | Palm kernel stearin | Palm kernel fat |
|---|---|---|---|
| $C_4$-$C_{10}$ fatty acids | 4 | 3.5 | 6 |
| Lauric acid | 52 | 54 | 48 |
| Myristic acid | 21 | 23 | 16 |
| Palmitic acid | 9 | 10 | 9 |
| Oleic acid | 9 | 8 | 16 |
| Stearic acid | 2 | 2 | 2 |
| Saturated fatty acids | 89 | 91 | 81 |
| Polyunsat. fatty acids | 1.8 | 1.2 | 3 |

Example 2

A steep melting fat b lend for use in a filling composition is prepared by blending 80 parts by weight of palm kernel fat with 20 parts by weight of palm kernel oil stearin. The N-line and fatty acid composition of the blend as well as of its components are presented in the following tables 2A and 2B.

Table 2A

|  | Blend | Palm kernel stearin | Palm kernel fat |
|---|---|---|---|
| $N_{10}$ | 74 | 88 | 68 |
| $N_{20}$ | 56 | 80 | 44 |
| $N_{30}$ | 0 | 29 | 0 |
| $N_{35}$ | 0 | 0 | 0 |
| $N_{40}$ | 0 | 0 | 0 |
| $N_{20}$-$N_{30}$ | 56 | 51 | 44 |

Table 2B

|  | Blend | Palm kernel stearin | Palm kernel fat |
|---|---|---|---|
| $C_4$-$C_{10}$ fatty acids | 5 | 3.5 | 6 |
| Lauric acid | 49 | 54 | 48 |
| Myristic acid | 18 | 23 | 16 |
| Palmitic acid | 9 | 10 | 9 |
| Oleic acid | 15 | 8 | 16 |
| Stearic acid | 2 | 2 | 2 |
| Saturated fatty acids | 83 | 91 | 81 |
| Polyunsat. fatty acids | 2.5 | 1.2 | 3 |

Example 3

A steep melting fat blend for use in a filling composition is prepared by blending 7 0 parts by weight of palm kernel stearin with 30 parts of palm oil. The N -line and fatty acid composition of the blend as well as of its components are presented in the following tables 3A and 3B.

Table 3A

|  | Blend | Palm kernel stearin | Palm oil |
|---|---|---|---|
| $N_{10}$ | 74 | 88 | 52 |
| $N_{20}$ | 54 | 80 | 26 |
| $N_{30}$ | 0 | 29 | 9 |
| $N_{35}$ | 0 | 0 | 6 |
| $N_{40}$ | 0 | 0 | 4 |
| $N_{20}$-$N_{30}$ | 54 | 51 | 17 |

Table 3B

|  | Blend | Palm kernel stearin | Palm oil |
|---|---|---|---|
| $C_4$-$C_{10}$ fatty acids | 2 | 3.5 | 0 |
| Lauric acid | 38 | 54 | 0.2 |
| Myristic acid | 16 | 23 | 1 |
| Palmitic acid | 20 | 10 | 44 |
| Oleic acid | 17 | 8 | 38 |
| Stearic acid | 3 | 2 | 4.4 |
| Saturated fatty acids | 79 | 91 | 52 |
| Polyunsat. fatty acids | 4 | 1.2 | 11 |

**Claims**

1. A coating or filling composition comprising from 5-90 wt.% of fat, said fat consisting of a non-hydrogenated, steep-melting fat blend having the following solid fat profile:

   - $N_{10}$ of 78-94%;
   - $N_{20}$ of 52-80%:
   - $N_{30}$ of 0-22%;
   - $N_{20}$-$N_{30}$ within the range of 45-70%;

   and the following fatty acid composition:

   - 0-10 wt.% of $C_4$-$C_{10}$ fatty acids;
   - 30-56 wt.% of lauric acid;
   - 9-25 wt.% of myristic acid;
   - 7-25 wt.% of palmitic acid;
   - 4-25 wt.% of oleic acid;
   - 1-7 wt.% of stearic acid;
   - 70-97 wt.% of saturated fatty acids;
   - 0-7 polyunsaturated fatty acids.

2. Coating or filling composition according to claim 1, wherein the steep-melting fat blend has the following solid fat profile:

   - $N_{30}$ of 0-20%; and
   - $N_{20}$-$N_{30}$ within the range of 48-60%.

3. Coating or filling composition according to claim 1 or 2, wherein the steep-melting fat blend has the following fatty acid composition:

   - 2-8 wt.% of $C_4$-$C_{10}$ fatty acids;
   - 42-56 wt.% of lauric acid;
   - 15-25 wt.% of myristic acid;
   - 7-14 wt.% of palmitic acid;
   - 4-20 wt.% of oleic acid;
   - 1-6 wt.% of stearic acid;
   - 80-97 wt.% of saturated fatty acids;
   - 0-3 wt.% of polyunsaturated fatty acids.

4. Coating or filling composition according to claim 1 or 2, wherein the steep-melting fat blend has the following fatty acid composition:

- 1-6 wt.% of $C_4$-$C_{10}$ fatty acids;
- 30-48 wt.% of lauric acid;
- 10-23 wt.% of myristic acid;
- 12-25 wt.% of palmitic acid;
- 14-28 wt.% of oleic acid;
- 2-6 wt.% of stearic acid;
- 68-90 wt.% of saturated fatty acids;
- 1-6 wt.% of polyunsaturated fatty acids;

5. Coating or filling composition according to any one of the preceding claims, wherein the fat blend contains triglycerides with a carbon number of 36 and triglycerides with a carbon number of 30 in a weight ratio of at least 20:1.

6. Coating or filling composition according to any one of the preceding claims having an $N_{35}$ of less than 5%.

7. Confectionary product or ice cream product containing at least 10 wt.% of a coating or filling composition according to any one of the preceding claims.

8. Process of preparing a fat blend as defined in any one of claims 1-7, said process comprising blending together the following components:

   a) 15-85 parts by weight of stearin fraction of lauric fat having a melting point in the range of 32-36 °C;
   b) 0-50 parts by weight of non-hydrogenated palm oil component with a melting point in the range of 30-54 °C; and
   c) 0-85 part by weight of lauric fat component with a melting point of 20-28 °C.

9. Process according to claim 8, comprising blending together:

   a) 15-85 parts by weight of stearin fraction of lauric fat having a melting point in the range of 32-36 °C; and
   b) 15-85 part by weight of lauric fat component with a melting point of 20-28 °C.

10. Process according to claim 8, comprising blending together:

   a) 60-85 parts by weight of stearin fraction of lauric fat having a melting point in the range of 32-36 °C; and
   b) 15-40 parts by weight of non-hydrogenated palm oil component with a melting point in the range of 30-54 °C.

11. Process according to any one of claims 7-10, wherein the stearin fraction of lauric fat has the following solid fat profile:

   - $N_{10}$ of 80-94%;
   - $N_{20}$ of 70-85%;
   - $N_{30}$ of 15-40%;
   - $N_{20}$-$N_{30}$ within the range of 45-65%.

12. Process according to any one of claims 7-11, wherein the stearin fraction of lauric fat is a stearin fraction of palm kernel oil, a stearin fraction of coconut oil, a stearin fraction of a mixture of palm kernel oil and coconut oil or a mixture of these stearin. fractions.

13. Process according to any one of claims 7-12, wherein the lauric fat component is selected from the group consisting of palm kernel oil, coconut oil and combinations thereof.

14. Process according to any one of claims 7-13, wherein the components a), b) and c) together represent at least 90 wt.% of the steep-melting fat blend

15. Process according to any one of claims 7-14, wherein the $N_{20}$-$N_{30}$ of the fat blend is at least 2% higher than the theoretical value calculated on the basis of the $N_{20}$ and $N_{30}$ values of the individual fat components.

**Patentansprüche**

1. Eine Beschichtungs- oder Füllzusammensetzung, umfassend 5 bis 90 Gew.-% an Fett, wobei das Fett aus einer nicht hydrierten Fettmischung mit steiler Schmelzkurve besteht, die folgendes Profil an festem Fett:

- $N_{10}$ von 78-94%;
- $N_{20}$ von 52-80%;
- $N_{30}$ von 0-22%;
- $N_{20}$-$N_{30}$ im Bereich von 45-70%;

und die folgende Fettsäurezusammensetzung aufweist:

- 0-10 Gew.-% an $C_4$-$C_{10}$ Fettsäuren;
- 30-56 Gew.-% an Laurinsäure;
- 9-25 Gew.-% an Myristinsäure;
- 7-25 Gew.-% an Palmitinsäure;
- 4-25 Gew.-% an Ölsäure;
- 1-7 Gew.-% an Stearinsäure;
- 70-97 Gew.-% an gesättigten Fettsäuren;
- 0-7 an mehrfach ungesättigten Fettsäuren.

2. Beschichtungs- oder Füllzusammensetzung gemäß Anspruch 1, wobei die Fettmischung mit steiler Schmelzkurve das folgende Profil an festem Fett aufweist:

- $N_{30}$ von 0-20%; und
- $N_{20}$-$N_{30}$ im Bereich von 48-60%.

3. Beschichtungs- oder Füllzusammensetzung gemäß Anspruch 1 oder 2, wobei die Fettmischung mit steiler Schmelzkurve die folgende Fettsäurezusammensetzung aufweist:

- 2-8 Gew.-% an $C_4$-$C_{10}$ Fettsäuren;
- 42-56 Gew.-% an Laurinsäure;
- 15-25 Gew.-% an Myristinsäure;
- 7-14 Gew.-% an Palmitinsäure;
- 4-20 Gew.-% an Ölsäure;
- 1-6 Gew.-% an Stearinsäure;
- 80-97 Gew.-% an gesättigten Fettsäuren;
- 0-3 Gew.-% an mehrfach ungesättigten Fettsäuren.

4. Beschichtungs- oder Füllzusammensetzung gemäß Anspruch 1 oder 2, wobei die Fettmischung mit steiler Schmelzkurve die folgende Fettsäurezusammensetzung aufweist:

- 1-6 Gew.-% an $C_4$-$C_{10}$ Fettsäuren;
- 30-48 Gew.-% an Laurinsäure;
- 10-23 Gew.-% an Myristinsäure;
- 12-25 Gew.-% an Palmitinsäure;
- 14-28 Gew.-% an Ölsäure;
- 2-6 Gew.-% an Stearinsäure;
- 68-90 Gew.-% an gesättigten Fettsäuren;
- 1-6 Gew.-% an mehrfach ungesättigten Fettsäuren.

5. Beschichtungs- oder Füllzusammensetzung gemäß einem der vorherigen Ansprüche, wobei die Fettmischung Triglyceride mit einer Kohlenstoffzahl von 36 und Triglyeride mit einer Kohlenstoffzahl von 30 in einem Gewichtsverhältnis von mindestens 20:1 enthält.

6. Beschichtungs- oder Füllzusammensetzung gemäß einem der vorherigen Ansprüche, die einen $N_{35}$-Wert von weniger als 5% aufweist.

7. Süßwaren oder Speiseeisprodukt, enthaltend mindestens 10 Gew.-% einer Beschichtungs- oder Füllzusammensetzung gemäß einem der vorherigen Ansprüche.

8. Verfahren zur Herstellung einer Fettmischung wie in einem der Ansprüche 1 bis 7 definiert, wobei das Verfahren das Zusammenmischen der folgenden Komponenten umfasst:

a) 15-85 Gewichtsteile der Stearinfraktion von Laurinfett mit einem Schmelzpunkt im Bereich von 32-36°C;
b) 0-50 Gewichtsteile nicht hydrierte Palmölkomponente mit einem Schmelzpunkt im Bereich von 30-54°C; und
c) 0-85 Gewichtsteile Laurinfettkomponente mit einem Schmelzpunkt von 20-28°C.

9. Verfahren gemäß Anspruch 8, umfassend das Zusammenmischen von:

a) 15-85 Gewichtsteilen der Stearinfraktion von Laurinfett mit einem Schmelzpunkt im Bereich von 32-36°C; und
b) 15-85 Gewichtsteilen der Laurinfettkomponente mit einem Schmelzpunkt von 20-28°C.

10. Verfahren gemäß Anspruch 8, umfassend das Zusammenmischen von:

a) 60-85 Gewichtsteilen der Stearinfraktion von Laurinfett mit einem Schmelzpunkt im Bereich von 32-36°C; und
b) 15-40 Gewichtsteilen der nichthydrierten Palmölkomponente mit einem Schmelzpunkt im Bereich von 30-54°C.

11. Verfahren gemäß einem der Ansprüche 7 bis 10, wobei die Stearinfraktion von Laurinfett das folgende Profil an festem Fett aufweist:

• $N_{10}$ von 80-94%;
• $N_{20}$ von 70-85%;
• $N_{30}$ von 15-40%;
• $N_{20}$-$N_{30}$ im Bereich von 45-65%.

12. Verfahren gemäß einem der Ansprüche 7 bis 11, wobei die Stearinfraktion von Laurinfett eine Stearinfraktion von Palmkernöl, eine Stearinfraktion von Kokosnussöl, eine Stearinfraktion eines Gemischs von Palmkernöl und Kokosnussöl oder ein Gemisch dieser Stearinfraktionen ist.

13. Verfahren gemäß einem der Ansprüche 7 bis 12, wobei die Laurinfettkomponente aus der Gruppe bestehend aus Palmkernöl, Kokosnussöl und Kombinationen davon ausgewählt ist.

14. Verfahren gemäß einem der Ansprüche 7 bis 13, wobei die Komponenten a), b) und c) gemeinsam mindestens 90 Gew.-% der Fettmischung mit steiler Schmelzkurve ausmachen.

15. Verfahren gemäß einem der Ansprüche 7 bis 14, wobei der $N_{20}$-$N_{30}$-Wert der Fettmischung mindestens 2% höher als der theoretische Wert, berechnet auf Basis der $N_{20}$-und $N_{30}$-Werte der einzelnen Fettkomponenten, ist.

**Revendications**

1. Composition d'enrobage ou de garnissage comprenant de 5 à 90 % en poids de graisse, ladite graisse étant constituée d'un mélange non hydrogéné de graisse fondue par trempage ayant le profil de graisses solides suivant :

• $N_{10}$ de 78 à 94% ;
• $N_{20}$ de 52 à 80 % ;
• $N_{30}$ de 0 à 22 % ;
• $N_{20}$-$N_{30}$ dans la plage de 45 à 70 % ;

et la composition en acides gras suivante :

• de 0 à 10 % en poids d'acides gras en $C_4$ à $C_{10}$ ;
• de 30 à 56 % en poids d'acide laurique ;
• de 9 à 25 % en poids d'acide myristique ;
• de 7 à 25 % en poids d'acide palmitique ;
• de 4 à 25 % en poids d'acide oléique ;
• de 1 à 7 % en poids d'acide stéarique ;

• de 70 à 97 % en poids d'acides gras saturés ;
• de 0 à 7 d'acides gras polyinsaturés.

2. Composition d'enrobage ou de garnissage selon la revendication 1, dans laquelle le mélange de graisse fondue par trempage a le profil de graisses solides suivant :

• $N_{30}$ de 0 à 20 % ; et et
• $N_{20}$-$N_{30}$ dans la plage de 48 à 60 %.

3. Composition d'enrobage ou de garnissage selon la revendication 1 ou 2, dans laquelle le mélange de graisse fondue par trempage a la composition en acides gras suivante :

• de 2 à 8 % en poids d'acides gras en $C_4$ à $C_{10}$ ;
• de 42 à 56 % en poids d'acide laurique ;
• de 15 à 25 % en poids d'acide myristique ;
• de 7 à 14 % en poids d'acide palmitique ;
• de 4 à 20 % en poids d'acide oléique ;
• de 1 à 6 % en poids d'acide stéarique ;
• de 80 à 97 % en poids d'acides gras saturés ;
• de 0 à 3 % en poids d'acides gras polyinsaturés.

4. Composition d'enrobage ou de garnissage selon la revendication 1 ou 2, dans laquelle le mélange de graisse fondue par trempage a la composition en acides gras suivante :

• de 1 à 6 % en poids d'acides gras en $C_4$ à $C_{10}$ ;
• de 30 à 48 % en poids d'acide laurique ;
• de 10 à 23 % en poids d'acide myristique ;
• de 12 à 25 % en poids d'acide palmitique ;
• de 14 à 28% en poids d'acide oléique ;
• de 2 à 6 % en poids d'acide stéarique ;
• de 68 à 90 % en poids d'acides gras saturés ;
• de 1 à 6 % en poids d'acides gras polyinsaturés.

5. Composition d'enrobage ou de garnissage selon l'une quelconque des revendications précédentes, dans laquelle le mélange de graisse contient des triglycérides ayant un nombre d'atomes de carbone de 36 et des triglycérides ayant un nombre d'atomes de carbone de 30 dans un rapport molaire d'au moins 20/1.

6. Composition d'enrobage ou de garnissage selon l'une quelconque des revendications précédentes ayant une valeur $N_{35}$ inférieure à 5 %.

7. Produit de confiserie ou produit de crème glacée contenant au moins 10 % en poids d'une composition d'enrobage ou de garnissage selon l'une quelconque des revendications précédentes.

8. Procédé de préparation d'un mélange de graisse selon l'une quelconque des revendications 1 à 7, ledit procédé comprenant le mélange des composants suivants :

a) de 15 à 85 parties en poids d'une fraction stéarine de graisse laurique ayant un point de fusion dans la plage de 32 à 36 °C ;
b) de 0 à 50 parties en poids d'un composant d'huile de palme non hydrogénée ayant un point de fusion dans la plage de 30 à 54 °C ; et
c) de 0 à 85 parties en poids d'un composant de graisse laurique ayant un point de fusion de 20 à 28 °C.

9. Procédé selon la revendication 8, comprenant le mélange :

a) de 15 à 85 parties en poids d'une fraction stéarine de graisse laurique ayant un point de fusion dans la plage de 32 à 36 °C ; et
b) de 15 à 85 parties en poids d'un composant de graisse laurique ayant un point de fusion de 20 à 28 °C.

**10.** Procédé selon la revendication 8, comprenant le mélange :

a) de 60 à 85 parties en poids d'une fraction stéarine de graisse laurique ayant un point de fusion dans la plage de 32 à 36 °C ; et
b) de 15 à 40 parties en poids d'un composant d'huile de palme non hydrogénée ayant un point de fusion dans la plage de 30 à 54 °C.

**11.** Procédé selon l'une quelconque des revendications 7 à 10, dans lequel la fraction stéarine de graisse laurique a le profil de graisses solides suivant :

• $N_{10}$ de 80 à 94 % ;
$N_{20}$ de 70 à 85 % ;
• $N_{30}$ de 15 à 40%;
• $N_{20}$-$N_{30}$ dans la plage de 45 à 65 %.

**12.** Procédé selon l'une quelconque des revendications 7 à 11, dans lequel la fraction stéarine de graisse laurique est une fraction stéarine d'huile de palmiste, une fraction stéarine d'huile de coco, une fraction stéarine d'un mélange d'huile de palmiste et d'huile de coco ou un mélange de ces fractions stéarine.

**13.** Procédé selon l'une quelconque des revendications 7 à 12, dans lequel le composant de graisse laurique est choisi dans le groupe constitué de l'huile de palmiste, de l'huile de coco et de leurs combinaisons.

**14.** Procédé selon l'une quelconque des revendications 7 à 13, dans lequel les composants a), b) et c) représentent ensemble au moins 90 % en poids du mélange de graisse fondue par trempage.

**15.** Procédé selon l'une quelconque des revendications 7 à 14, dans lequel la fraction $N_{20}$-$N_{30}$ du mélange de graisse est au moins 2 % supérieure à la valeur théorique calculée sur la base des valeurs $N_{20}$ et $N_{30}$ des composants individuels de graisse.

**EP 2 068 640 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4902527 A
- US 5932275 A
- US 5439700 A